# DEMANDE DE BREVET EUROPEEN

(11) **EP 3 528 368 A1**
(43) Date de publication de la demande: **21.08.2019**
(21) Numéro de dépôt: 19157317.9
(22) Date de dépôt: 14.02.2019
(51) Int. Cl.: H02K 1/28, H02K 15/03, H02K 1/27

(54) **ROTOR AUX AIMANTS PERMANENTS D'UNE MACHINE ÉLECTRIQUE TOURNANTE**

(30) Priorité: 16.02.2018 FR 1851343
(71) Demandeur: Moteurs Leroy-Somer, 16915 Angouleme (FR)
(72) Inventeur: CHAMAND, Jérémy, 69360 Saint Symphorien d'Ozon (FR); ADRIEN, Gaetan, 69970 Chaponnay (FR)
(74) Mandataire: Nony

(57) **Abrégé**

Rotor (1) de machine électrique tournante, comportant un arbre (2), au moins un aimant (10) de forme annulaire, engagé sur l'arbre,un pluralité des joints ou organes élastiquement déformable (9) s'interposant radialement entre l'arbre (2) et l'aimant (10), l'arbre (2) étant pourvu d'une pluralité de gorges (7 ;17). Chaque joint (9) est disposés dans une gorge (7 ;17), le ou un des aimants (10) s'appliquant radialement sur lau moins un des joints ou organes élastiquement déformable (9), qui ont en forme d'un manchon tubulaire inséré sur l'arbre (2).

## Description

La présente invention concerne les machines électriques tournantes et plus particulièrement les rotors de moteurs électriques.

Il est connu d'assembler des aimants permanents de forme annulaire sur l'arbre d'un rotor par collage.

Or, l'emploi de colle peut nécessiter, en présence de solvants volatiles, de procéder dans des conditions contraignantes pour les opérateurs; de plus, la colle doit être choisie pour conserver sa fonction adhésive dans le temps, malgré les contraintes thermiques liées au fonctionnement de la machine, notamment la dilatation différentielle entre le matériau de l'arbre et celui des aimants, et l'exposition à un environnement relativement agressif dans certaines applications. Enfin, il est nécessaire de prévoir un jeu entre les aimants et l'arbre pour leur montage, ce qui peut entraîner un défaut de concentricité.

Il existe par conséquent un besoin pour améliorer encore la conception des rotors de machines électriques tournantes et remédier aux inconvénients des solutions actuelles, rappelés ci-dessus.

L'invention atteint cet objectif en proposant un rotor de machine électrique tournante comportant :
- Un arbre,
- au moins un aimant de forme annulaire, engagé sur l'arbre,
- au moins un organe élastiquement déformable s'interposant radialement entre l'arbre et l'aimant.

Grâce à l'invention, l'immobilisation du ou des aimants sur l'arbre peut s'effectuer sans colle, par friction de contact entre le ou les organes élastiquement déformables et le ou les aimants d'une part, et friction de contact du ou des organes élastiquement déformables sur l'arbre d'autre part.

Le ou les organes élastiquement déformables permettent de rendre les aimants concentriques par rapport à l'arbre, ce qui élimine très simplement tout défaut de concentricité. De plus, le ou les organes élastiquement déformables permettent de reprendre la dilatation différentielle entre le matériau de l'arbre et celui des aimants.

De préférence, l'au moins un aimant de forme annulaire est placé après l'insertion du ou des organes élastiquement déformables.

Le ou chaque organe élastiquement déformable est de préférence un joint, qui est avantageusement annulaire.

En variante, l'organe élastiquement déformable est sous forme de manchon ou de chaussette engagée sur l'arbre. En variante encore, chaque organe élastiquement déformable est sons forme de joint allongé, s'étendant le long de l'arbre.

De préférence, l'arbre comporte plusieurs gorges, et chaque gorge reçoit un joint.

De préférence encore, ces gorges sont de forme annulaire, et les joints également.

Dans une variante, l'arbre comporte plusieurs gorges axiales, et chacune de ces gorges axiales reçoit un joint de forme allongée le long de l'arbre.

Le choix de la matière et de la dureté des joints peut s'effectuer en fonction des conditions d'utilisation. Par exemple, on utilise des joints en FKM pour la tenue à la température.

La dureté Shore A ou D des joints va par exemple de 70 à 90.

De préférence, les joints utilisés sont des joints toriques, encore appelés « O-rings », ou des joints de section polygonale, notamment rectangulaire ou multilobée, notamment quadrilobée, entre autres formes.

Le nombre de gorges, ainsi que la dureté du joint, ou la compression du joint, sont choisis en fonction du nombre d'aimants à assembler sur l'arbre, et du couple appliqué sur chaque aimant. Par exemple, plus le couple sera élevé, plus le nombre de joints pourra être important.

De préférence, l'arbre comporte entre 1 et 40 gorges, et le rotor entre 1 et 20 aimants. Le nombre de joints est par exemple au moins le double de celui des aimants, chaque aimant reposant alors sur au moins deux joints. Les gorges peuvent être réparties par paires sur l'arbre, chaque paire de gorges recevant les deux joints destinés à supporter un aimant, l'écart entre deux gorges d'une paire étant supérieur à celui entre les gorges adjacentes de paires voisines L'écart peut encore être le même.

L'arbre peut être réalisé par usinage, de façon monolithique, en un matériau de préférence magnétique, tel que de l'acier doux.

De préférence, les aimants présentent une forme cylindrique de révolution, avec une surface radialement intérieure cylindrique de révolution et une surface radialement extérieure également cylindrique de révolution.

Les gorges peuvent être usinées dans une surface cylindrique de révolution de l'arbre, de diamètre extérieur compris par exemple entre 10 et 100mm.

Chaque aimant peut comporter deux pôles ou plus. Les pôles de deux aimants consécutifs peuvent être décalés angulairement ou non.

L'invention a encore pour objet la machine électrique tournante comportant un tel rotor.

L'invention a encore pour objet un procédé de fabrication d'un rotor de machine électrique tournante, notamment une machine telle que définie ci-dessus, dans lequel on usine un arbre pour former des gorges, notamment de forme annulaire, on dispose des joints, notamment annulaires, dans les gorges et l'on monte sur l'arbre des aimants permanents de forme annulaire, de telle sorte que ces derniers soient retenus par friction par les joints sur l'arbre.

L'invention pourra être mieux comprise à la lecture de la description détaillée qui va suivre, d'exemples non limitatifs de mise en oeuvre de celle-ci, et à l'examen du dessin annexé, sur lequel :
- la figure 1 représente un exemple de rotor d'une machine électrique selon l'invention,
- la figure 2 représente les éléments constitutifs du rotor de la figure 1, à l'état non assemblé,
- la figure 3 représente l'arbre après montage des joints,
- la figure 4 représente l'arbre de la figure 3, sans les joints,
- la figure 5 illustre différentes côtes,
- la figure 6 représente en coupe longitudinale un exemple de machine selon l'invention,
- la figure 7 représente une variante de rotor selon l'invention,
- la figure 8 est une coupe transversale selon VIII-VIII de la figure 7,
- la figure 9 est une coupe longitudinale d'une variante de rotor selon l'invention, et
- les figures 10 et 11 illustrent des exemples de variantes de sections de joints.

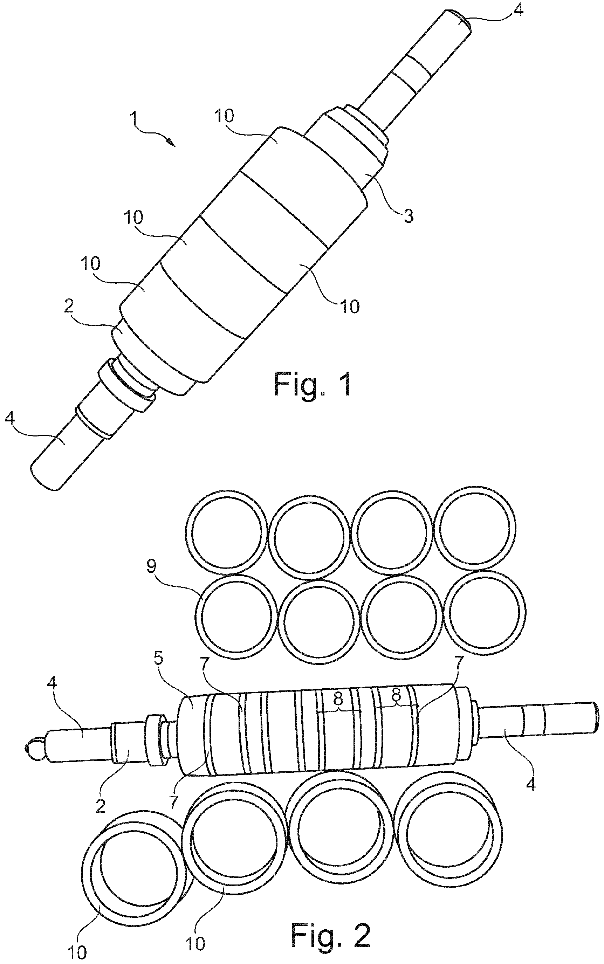

Le rotor 1 représenté sur les figures 1 à 5 est un rotor de moteur électrique à aimants permanents.

Ce rotor 1 comporte un arbre 2, par exemple en acier magnétique, ayant une partie principale 3 et des parties d'extrémités 4 destinées à être engagées dans des paliers non représentés sur ces figures.

La partie principale 3 présente une surface cylindrique de révolution 5, sur laquelle sont réalisées des gorges annulaires 7 par usinage, comme on peut le voir sur la figure 2 notamment. Chaque gorge 7 présente de préférence une forme rectangulaire en section.

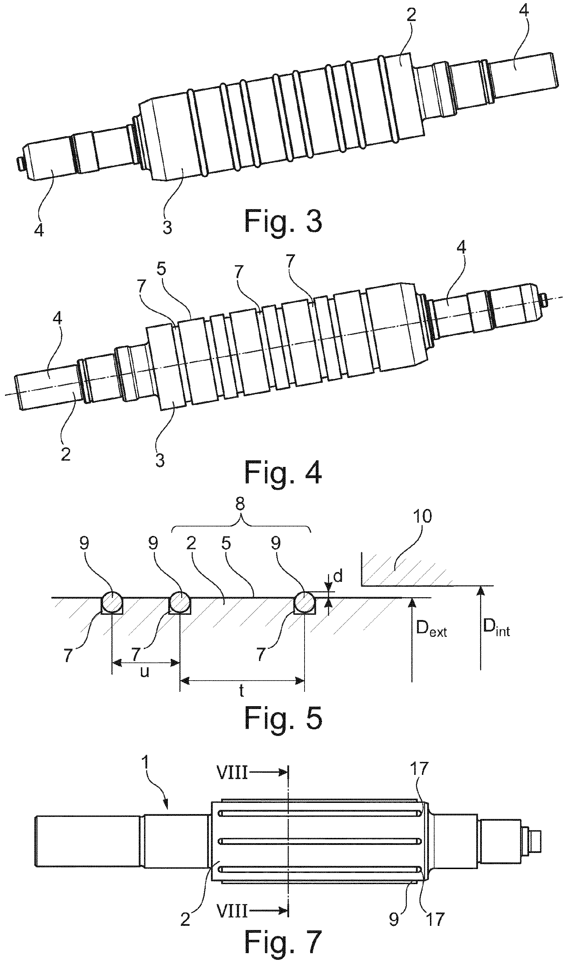

Les gorges 7 sont au nombre de huit dans l'exemple illustré, et sont réparties par paires 8. L'écartement t entre les axes de deux gorges 7 d'une paire 8 est par exemple supérieur à l'écartement u entre les axes de deux gorges 8 de paires adjacentes, comme illustré à la figure 5. On a par exemple t compris entre 10 et 15 mm et u compris entre 2 et 15mm. On a encore u compris entre 0,2 t et 1 t par exemple. Des joints toriques 9 sont disposés dans les gorges 7. La section des joints 9 est choisie de telle sorte que les joints 9 fassent saillie sur la surface extérieure de la partie principale du rotor.

Pour un diamètre extérieur Dext de la partie principale 3 de 27 mm, la profondeur des gorges fait par exemple 1.76mm et leur diamètre 23.48mm, de telle sorte que les joints toriques 9 font saillie d'une distance d de 0.825 mm par rapport à la surface 5 de l'arbre.

Des aimants permanents 10, de forme annulaire, sont montés sur l'arbre 2.

Dans l'exemple illustré, les joints 9 sont en contact direct avec les aimants permanents 10 et l'arbre 2.

Le diamètre intérieur Dint de ces aimants 10 est inférieur à Dext+2d, de telle sorte que les aimants frottent sur les joints et sont immobilisés par friction sur l'arbre 2.

De préférence, on a Dint=Dext+s.2d, avec s compris entre 0.01 et 0.9, mieux 20% de compression, ce qui assure un bon maintien des aimants sans abîmer les joints ni rendre la mise en place des aimants trop difficile.

Chaque aimant 10 repose sur les deux joints 9 d'une paire 8, en étant centré sur ceux-ci.

Chaque aimant présente deux pôles N et S ou plus, par exemple 2 pôles N et deux pôles S, l'aimantation étant radiale.

Dans un exemple de mise en oeuvre, le diamètre extérieur Dext de la partie principale fait 38.18 mm, les joints toriques 9 font 2.62 mm de diamètre en section, la profondeur des gorges 7 fait 1.76mm, et le diamètre intérieur Dint des aimants permanents 10 fait 38.45mm.

Pour assembler le rotor, on dispose les joints 9 dans les gorges 7 grâce à l'élasticité du matériau qui les constitue, puis on fait glisser les aimants permanents sur les joints 9 les uns après les autres.

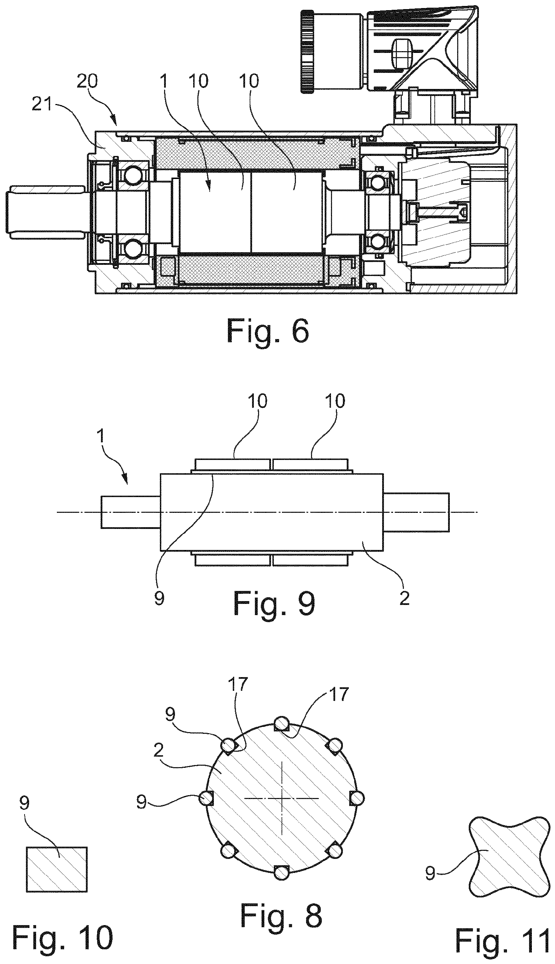

Le rotor 1 selon l'invention est logé dans un stator 21, pour former une machine tournante 20, dont un exemple est représenté schématiquement à la figure 6. Le stator 21 peut être quelconque. La machine électrique 20 est de préférence un moteur électrique, par exemple un moteur synchrone.

Sur cette figure, le rotor 1 est représenté avec deux aimants 10.

On a représenté aux figures 7 et 8 une variante de rotor 1 dans laquelle les joints 9 se présentent sous la forme de bandes parallèles à l'axe longitudinal du rotor, chaque joint 9 étant disposé dans une gorge 17 sous forme de rainure parallèle à l'axe de rotation.

Les gorges 17 sont équiréparties autour de l'axe longitudinal du rotor, étant par exemple au nombre de huit comme illustré. Les aimants 10 sont enfilés sur les joints 9.

Sur la figure 9, on a représenté une variante de rotor dans laquelle le ou les aimants 10 sont montés sur un manchon tubulaire 9 en élastomère, inséré sur l'arbre 2.

Le manchon 9 s'étend de préférence sur une distance supérieure à la largeur cumulée des aimants 10, comme illustré.

Comme illustré, le manchon 9 est en contact direct avec les aimants 10 et l'arbre 2.

Le moteur peut être un servomoteur. Bien entendu, l'invention n'est pas limitée à l'exemple qui vient d'être décrit. Par exemple, le nombre de gorges 7 ou 17 et de joints 9 peut être différent, de même que le nombre d'aimants 10.

Les joints 9 peuvent être toriques et de section circulaire, ou annulaires avec une section rectangulaire comme illustré à la figure 10 ou quadrilobée comme illustré à la figure 11.

## Revendications

1. Rotor (1) de machine électrique tournante, comportant :
- Un arbre (2),
- au moins un aimant (10) de forme annulaire, engagé sur l'arbre,
- au moins un organe élastiquement déformable (9) s'interposant radialement entre l'arbre (2) et l'aimant (10),l'arbre (2) étant pourvu d'une pluralité de gorges (7 ;17), des joints (9) étant disposés chacun dans une gorge (7 ;17) respective, ledit au moins un aimant (10) s'appliquant radialement sur au moins l'un des joints (9), ou l'organe élastiquement déformable (9) étant sous forme de manchon tubulaire inséré sur l'arbre (2).

2. Rotor selon la revendication 1, les gorges (7) étant annulaires, de même que les joints (9).

3. Rotor selon la revendication 2, les joints (9) étant des joints toriques, ou de section rectangulaire ou multilobée.

4. Rotor selon l'une quelconque des revendications 1 à 3, l'arbre (2) comportant entre 2 et 40 gorges (7 ;17).

5. Rotor selon l'une quelconque des revendications 1 à 4, le rotor comportant entre 1 et 20 aimants (10).

6. Rotor selon l'une quelconque des revendications 1 à 5, chaque aimant (10) reposant sur au moins deux joints (9).

7. Rotor selon l'une quelconque des revendications 2 à 6, les gorges (7) étant réparties par paires sur l'arbre (2), chaque paire (8) de gorges (7) recevant les deux joints (9) destinés à supporter un aimant, l'écart (t) entre deux gorges d'une paire étant de préférence supérieur à celui (u) entre les gorges adjacentes de paires voisines.

8. Rotor selon l'une quelconque des revendications précédentes, les aimants (10) présentant une forme cylindrique de révolution, avec une surface radialement intérieure cylindrique de révolution et une surface radialement extérieure également cylindrique de révolution.

9. Rotor selon l'une des revendications 1 à 7, avec Dint=Dext+s.2d, s étant compris entre 0.01 et 0.9, où Dint est le diamètre intérieur des aimants, Dext le diamètre de la partie (3) du rotor sur laquelle sont montés les aimants, d la distance dont les joints font saillie sur la surface de l'arbre.

10. Rotor selon la revendication 1, les gorges (17) étant axiales, la machine comportant plusieurs joints (9) engagés dans ces gorges axiales (17).

11. Machine électrique tournante (20), notamment moteur électrique, comportant un rotor (1) tel que défini dans l'une quelconque des revendications précédentes.

12. Procédé de fabrication d'un rotor (1) de machine électrique tournante telle que défini dans l'une quelconque des revendications 1 à 10, dans lequel on usine un arbre (2) pour former des gorges (7 ; 17), notamment de forme annulaire, on dispose des joints (9) dans les gorges (7 ; 17) et l'on monte sur l'arbre (2) des aimants permanents (10) de forme annulaire, de telle sorte que ces derniers soient retenus par friction par les joints sur l'arbre.
